# FASCICULE DE BREVET EUROPEEN

(11) **EP 2 954 671 B1**
(45) Date de publication et mention de la délivrance du brevet: **26.10.2016**
(21) Numéro de dépôt: 14702864.1
(22) Date de dépôt: 06.02.2014
(51) Int. Cl.: H04N 5/372, H04N 5/374

(54) **CAPTEUR D'IMAGE À DÉFILEMENT ET SOMMATION AVEC DÉTECTION D'ERREURS DE DÉFILEMENT**
SENSOR FÜR BEWEGTE BILDER UND SUMMIERUNG MIT BEWEGUNGSFEHLERERKENNUNG
MOVING IMAGE SENSOR AND SUMMATION HAVING MOVEMENT ERROR DETECTION

(30) Priorité: 07.02.2013 FR 1351036
(43) Date de publication de la demande: 16.12.2015
(73) Titulaire: E2V Semiconductors, 38120 Saint Egrève (FR)
(72) Inventeur: MAYER, Frédéric, 38500 Voiron (FR); DE MONTE, Bertrand, 38120 Saint Egrève (FR)
(74) Mandataire: Desvignes, Agnès
(86) Numéro de dépôt international: PCT/EP2014/052294
(87) Numéro de publication internationale: WO 2014/122198

(56) Documents cités:
- WO-A1-2007/051699
- US-A- 4 694 316

## Description

L'invention concerne les capteurs d'image à défilement et sommation de signaux, également appelés capteurs TDI, de l'anglais "Time Delay Integration", dans lesquels une image d'une ligne de points d'une scène observée est reconstituée par addition d'images successives prises par plusieurs lignes photosensibles observant successivement une même ligne de la scène au fur et à mesure que la scène défile devant le capteur perpendiculairement aux lignes.

Ces capteurs sont utilisés par exemple dans des systèmes d'observation de la terre par satellite ou des systèmes d'inspection d'objets sur tapis roulants. Ils comprennent plusieurs lignes parallèles de pixels photosensibles ; le séquencement des circuits de commande des différentes lignes (contrôle de temps d'exposition puis de lecture des charges photogénérées) est synchronisé par rapport au défilement relatif de la scène et du capteur, de manière que toutes les lignes du capteur voient les unes après les autres la même ligne de la scène observée. Les signaux générés sont ensuite additionnés point à point pour chaque point de la ligne observée.

Les capteurs sont composés d'une matrice de lignes et de colonnes de pixels et les colonnes sont orientées dans la direction du déplacement relatif. Un problème qu'on peut rencontrer dans ces capteurs est le risque de sommation imprécise des signaux des pixels dans le cas où le capteur se décale latéralement par rapport à la direction des colonnes de pixels, ou dans le cas où la vitesse de défilement varie par rapport à la cadence d'intégration et de sommation des charges générées par les pixels appartenant à une même colonne.

Ces décalages de direction ou de vitesse peuvent venir notamment de vibrations latérales ou d'à-coups longitudinaux du système de défilement relatif (par exemple dans le cas d'un tapis roulant transportant des objets à inspecter).

On comprend en effet que si un point de la scène observée passe devant une colonne de pixels mais change, en cours de sommation, pour passer en partie devant une autre colonne, le résultat de la sommation sera erroné. Il en est de même si le défilement n'est pas rigoureusement synchronisé avec les durées d'intégration.

On peut agir sur le système de défilement mécanique pour en minimiser les vibrations latérales ou longitudinales, mais cela n'est pas toujours possible. Il serait donc intéressant de détecter à l'aide du capteur lui-même l'existence de telles vibrations, soit pour en informer l'utilisateur, soit pour corriger directement, dans la mesure du possible, l'erreur engendrée par une vibration détectée.

Dans la publication de brevet US2011/0115793 on a décrit un capteur TDI avec une division de la matrice de pixels en deux sous-matrices décalées latéralement l'une par rapport à l'autre d'un demi-pixel, en vue de doubler la résolution du capteur. On a décrit aussi une amélioration de la résolution par l'introduction d'un angle non nul de la direction de défilement par rapport à la direction des colonnes de pixels.

Dans le brevet US7227984 on a décrit l'utilisation de plusieurs images décalées les unes par rapport aux autres d'une fraction de pixel, toujours pour améliorer la résolution.

Enfin, dans la publication de brevet DE102008024417B3 on a décrit un capteur TDI avec deux matrices décalées latéralement d'un pixel l'une par rapport à l'autre, pour obtenir la résolution désirée bien que les registres de lecture de charges (CCD) aient une résolution moitié de celle des pixels.

Dans ces documents, il n'y a pas de détection de décalage latéral ou longitudinal du défilement au cours d'une même période d'observation d'une ligne d'image.

L'invention propose de modifier le capteur d'image pour y inclure des moyens de détection des erreurs de défilement relatif, soit latéralement, soit longitudinalement, soit les deux à la fois. De préférence, le capteur comprendra aussi des moyens pour modifier les sommations effectuées pour corriger au moins en partie la conséquence de ces erreurs.

Pour cela, le capteur matriciel, qui comporte N lignes et P colonnes de pixels, est divisé en plusieurs sous-matrices de P colonnes ayant chacune un nombre de lignes inférieur à N. Pour chaque colonne, la sommation des signaux se fait séparément dans chaque sous-matrice avant de faire une sommation globale des signaux des différentes sous-matrices. Parallèlement à l'exécution de ces sommations partielles on observe, grâce à des groupes de colonnes supplémentaires associées à chaque sous-matrice, un décalage éventuel de l'image entre une sous-matrice et la suivante. Les groupes de colonnes qui servent à cette observation ont des positions différentes relativement à chaque sous-matrice, de sorte que la comparaison des signaux produits par les groupes de colonnes associés aux différentes sous-matrices permet de déceler un décalage de défilement relatif.

Si on le souhaite, on se sert alors de ce décalage pour modifier la sommation des signaux d'image observés par les différentes sous-matrices. Pour un décalage latéral, au lieu d'additionner rigoureusement les signaux d'une même colonne issus des différentes sous-matrices, comme on le ferait si le défilement était sans défaut, on effectue une combinaison linéaire entre les signaux d'une colonne d'une première sous-matrice et les signaux de la même colonne et de colonnes voisines dans les autres sous-matrices, avec une pondération algébrique des colonnes de ces autres sous-matrices en fonction du décalage constaté entre la première sous-matrice et les autres sous-matrices. La division de la matrice peut se faire en deux sous-matrices ou plus.

Par conséquent, en résumé, on propose selon l'invention un capteur d'image matriciel à défilement et sommation de signaux, comprenant une matrice de N lignes de P colonnes de pixels organisés avec un pas constant en ligne et en colonne, avec des moyens pour sommer les signaux issus de N pixels ayant vu un même point d'une image observée au cours de N étapes d'intégration de charges, caractérisé en ce que :
- la matrice est divisée en au moins une première et une deuxième sous-matrices se succédant dans le sens des colonnes, les signaux intégrés par les colonnes d'une sous-matrice pouvant être lus indépendamment des signaux intégrés par les colonnes des autres sous-matrices,
- de chaque côté de chaque sous-matrice sont disposés au moins un premier et un deuxième groupes de colonnes supplémentaires associés à ce côté de la sous-matrice,
- les groupes de colonnes associés à un côté de la deuxième sous-matrice sont identiques aux groupes de colonnes associés au même côté de la première sous-matrice et à chaque groupe associé à la première sous-matrice on fait correspondre un groupe respectif de la deuxième sous-matrice, la position relative du deuxième groupe associé à la première sous-matrice étant différente de la position relative du deuxième groupe correspondant de la deuxième sous-matrice, la position relative d'un groupe étant définie par rapport à la sous-matrice correspondant à ce groupe, et la différence des dites positions relatives des deux deuxièmes groupes correspondants étant inférieure au pas des pixels de la matrice,
- le capteur comprend en outre des moyens pour comparer entre eux les signaux intégrés issus des groupes de colonnes correspondants des deux sous-matrices et des moyens pour sélectionner, parmi les couples de groupes correspondants, celui qui fournit les signaux les plus proches l'un de l'autre, la différence de position relative du couple de groupes sélectionné représentant une information de décalage relatif entre le capteur et l'image observée.

Les positions relatives des deux premiers groupes sont de préférence identiques ; elles peuvent cependant être différentes, mais si elles sont différentes, leur différence n'est pas la même que la différence entre les positions des deux deuxièmes groupes.

Ainsi, on compare des signaux issus de groupes de colonnes qui ne devraient pas voir la même image puisqu'ils ne sont pas à la même position relative par rapport à la matrice de pixels. Si un couple de groupes voit pourtant des signaux qui sont pratiquement les mêmes, on en déduit qu'ils ont vu la même image et que la position du capteur par rapport à l'image a donc bougé pendant le temps que l'image a mis pour passer de la première sous-matrice à la deuxième.

Si on augmente le nombre de groupes de couples de colonnes et si on leur donne des positions relatives toutes différentes, mais toutes inférieures au pas des colonnes, on obtient une information plus précise sur le décalage entre le capteur et l'image en défilement.

Si on subdivise plus la matrice, c'est-à-dire si on augmente le nombre de sous-matrices et le nombre de comparaisons deux à deux des signaux issus de couples de groupes de colonnes, on peut détecter des variations relatives de position plus rapides pour une même vitesse de défilement. Les différences relatives de position entre groupes de colonnes correspondants de deux sous-matrices successives sont variables selon le rang du groupe.

Enfin, si on augmente le nombre de colonnes dans chaque groupe, on obtient une plus grande précision dans la comparaison des signaux issus de deux groupes. Cette comparaison est en effet principalement effectuée sur le motif global du signal en sortie d'un groupe de colonnes.

La différence de position entre les positions relatives des groupes de deux sous-matrices peut être une différence de position latérale, c'est-à-dire dans le sens des lignes, en vue de la recherche d'un décalage latéral du capteur par rapport à l'image. Mais elle peut être aussi une différence de position longitudinale, dans le sens du défilement, c'est-à-dire dans le sens des colonnes, en vue de la recherche d'un écart de synchronisation entre la vitesse de défilement de l'image par rapport au capteur et la cadence d'intégration et de lecture des charges photo-générées dans les pixels.

On peut prévoir également que la différence de position se fait à la fois dans le sens des lignes et dans le sens des colonnes. Dans ce dernier cas, on peut prévoir que les groupes de colonnes sont associés en ensembles de plusieurs groupes chacun, associés à chaque sous-matrice ; les groupes d'un même ensemble sont espacés latéralement d'une même valeur, nulle ou non nulle, et, pour la deuxième sous-matrice, décalés longitudinalement les uns par rapport aux autres d'une distance différente selon le rang du groupe dans l'ensemble mais identique pour les groupes de même rang des différents ensembles de la deuxième sous-matrice, les ensembles de même rang dans la série d'ensembles étant décalés latéralement l'un par rapport à l'autre d'une distance qui varie selon le rang de ces ensembles.

Le capteur selon l'invention peut être du type dans lequel la sommation est une sommation analogique, faite par addition de charges électriques, ou du type dans lequel la sommation est faite par addition de signaux numériques, ou encore un capteur avec une sommation mixte analogique et numérique.

D'autres caractéristiques et avantages de l'invention apparaîtront à la lecture de la description détaillée qui suit et qui est faite en référence aux dessins annexés dans lesquels :
- la figure 1 représente un capteur matriciel destiné à fonctionner par défilement et sommation de signaux issus d'une même ligne d'image ;
- la figure 2 représente le principe de l'organisation de la matrice selon l'invention, pour la détection de décalages latéraux ;
- la figure 3 représente une organisation du capteur avec une subdivision de la matrice en trois parties;
- la figure 4 représente un exemple de réalisation simple avec trois sous-matrices ;
- la figure 5 représente une organisation du capteur pour la détection d'une erreur de vitesse de défilement ;
- la figure 6 représente une organisation pour la détection combinée d'un décalage latéral et d'une erreur de vitesse de défilement.

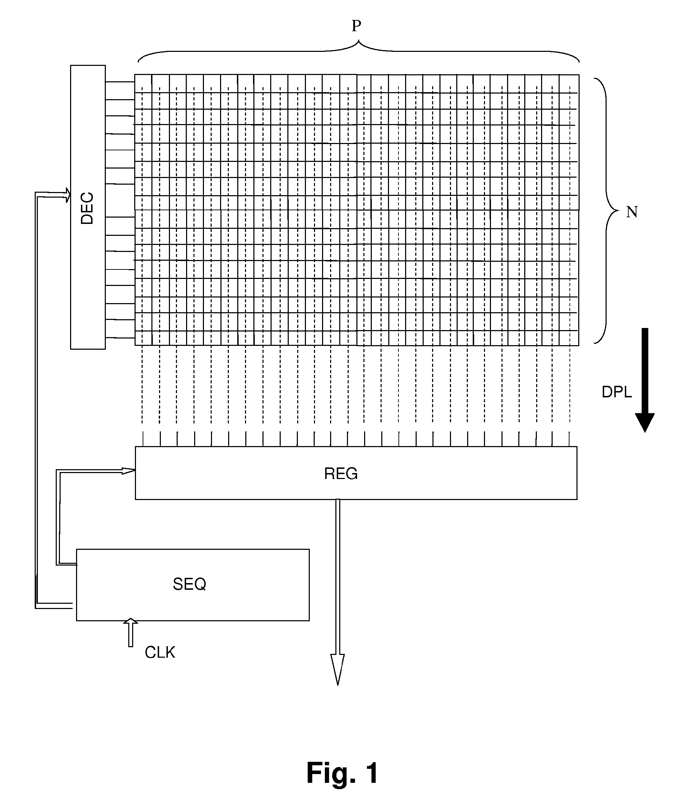

Sur la figure 1 on a représenté schématiquement un capteur d'image matriciel de type TDI, destiné à fonctionner en défilement relatif de l'image par rapport au capteur dans le sens des colonnes de pixels. La flèche DPL indique ce sens relatif de déplacement.

Le capteur comprend P colonnes et N lignes de pixels. Chaque ligne observe P points d'une ligne d'image pendant un temps d'intégration Tᵢ. L'intégration de charges se renouvelle avec une période T. Si une ligne de pixels du capteur observe une ligne d'image pendant une première période, la ligne de pixels suivante observe la même ligne d'image pendant la période suivante, et ainsi de suite. Il y a synchronisation précise entre la période d'intégration du capteur et la vitesse de défilement relatif entre le capteur et la scène observée pour que le déplacement relatif de l'image pendant la durée T corresponde exactement à un pas des lignes. Si le pas des lignes est P_{L} et la vitesse de défilement est V, on effectue une intégration et une lecture de charges cycliquement avec une période T=P_{L}/V. S'il y a N lignes de pixels, toutes les lignes vont observer successivement la même ligne d'image. Les signaux correspondant à un même point d'image, qui résultent de l'observation de ce point par N pixels successifs, sont additionnés pour produire un signal unique représentant l'éclairement de ce point. Le signal accumulé est fourni à une cadence correspondant à la période T.

On ne s'intéresse pas ici, car ce n'est pas l'objet de l'invention, à la manière dont est faite la sommation des signaux : elle peut être faite directement sous forme d'une sommation de charges électriques engendrées par l'éclairement (comme c'est le cas dans les capteurs CCD à défilement et intégration de charges), ou sous forme d'une sommation numérique des résultats de conversion analogique-numérique de tensions échantillonnées représentant les charges intégrées au cours de chaque période d'intégration, ou encore une sommation mixte à la fois analogique pour additionner des charges et numérique pour additionner des signaux numérisés.

On a donc simplement représenté en bas de la matrice de NxP pixels un registre d'accumulation REG qui fournit pour chaque colonne la somme des signaux correspondant à l'observation d'un même point d'image par les N pixels de la colonne. Le fonctionnement de ce registre REG est défini par un séquenceur SEQ qui gère aussi le fonctionnement de la matrice de pixels pour permettre la sommation synchronisée, notamment grâce à un décodeur de ligne qui permet de lire les charges engendrées dans une ligne déterminée de la matrice au moment où on a besoin de la lire. Le séquenceur est commandé par une horloge générale CLK.

On comprend que si le déplacement relatif n'est pas rigoureusement et uniformément parallèle à la direction des colonnes, ou s'il n'est pas rigoureusement synchronisé avec le fonctionnement périodique du capteur, des erreurs se produiront. En effet, on additionnera des signaux issus de pixels qui n'ont pas vu exactement le même point d'image. L'invention a pour but de détecter et éventuellement corriger ces erreurs.

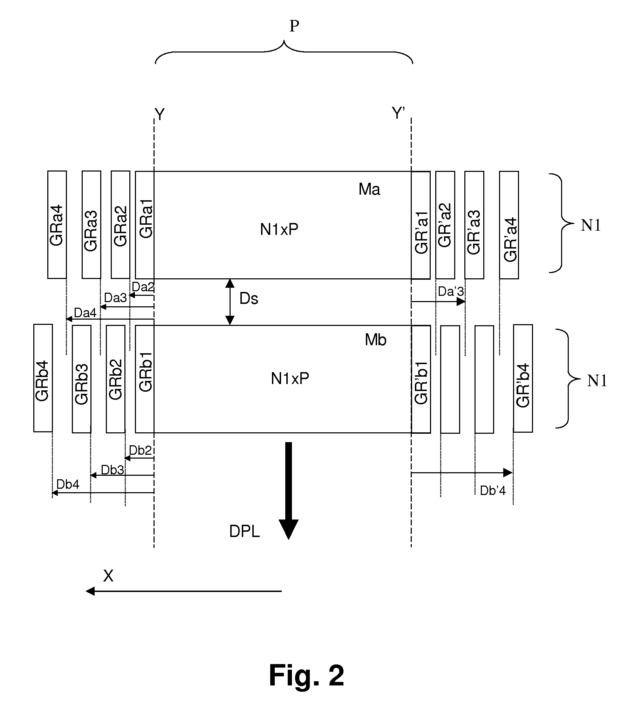

La figure 2 représente une organisation de la matrice de pixels pour la mise en oeuvre de l'invention dans le cas où on cherche à détecter des erreurs de décalage latéral se produisant au cours d'une durée de N périodes d'intégration. On a représenté les matrices de pixels sous la forme de rectangles.

La matrice de N lignes est subdivisée en deux sous-matrices Ma et Mb de N1 lignes ; ces deux matrices ont de préférence, mais pas obligatoirement le même nombre de lignes (N = 2N1). Dans d'autres exemples elle pourrait être subdivisée en plus de deux sous-matrices comme on le verra plus loin. Chaque sous-matrice peut être lue indépendamment, c'est-à-dire que la sommation des informations des pixels d'une colonne au cours du défilement est partielle et ne concerne que N1 pixels d'une même colonne. Mais les résultats des sommations peuvent être additionnés pour effectuer l'équivalent d'une sommation sur N lignes, pour chaque colonne de la matrice. Les deux sous-matrices peuvent être séparées d'une distance de séparation Ds (par exemple pour laisser au-dessous de la sous-matrice Ma de la place pour des circuits de lecture, de numérisation et de sommation de cette sous-matrice). Dans ce cas, on doit évidemment tenir compte de cette distance Ds dans le séquencement afin que les lignes d'image vues par la sous-matrice Mb soient bien les mêmes que celles qui ont été vues par la sous-matrice Ma. Les colonnes de la sous-matrice Ma sont alignées avec les colonnes de la sous-matrice Mb.

De plus, on adjoint à chaque sous-matrice, et de chaque côté de celle-ci, des groupes de colonnes supplémentaires destinés à la détection d'erreur. Chaque rectangle allongé dans le sens vertical sur la figure 2 représente un groupe de colonnes. Chaque groupe comprend plusieurs colonnes. Les groupes affectés d'un indice "a" sont associés à la sous-matrice Ma ; les groupes affectés d'un indice "b" sont associés à la sous-matrice Mb ; les groupes situés du côté droit sont affectés d'un indice prime ('), mais pas les groupes situés du côté gauche. Il y a au moins deux groupes de colonnes associés à chaque côté de chaque sous-matrice ; dans l'exemple représenté il y a quatre groupes de colonnes de chaque côté et ils sont affectés d'un rang respectif de 1 à 4 selon leur éloignement par rapport à la sous-matrice correspondante, le rang 1 étant le plus proche.

Il y a donc les groupes GRa1, GRa2, GRa3 et GRa4 associés au côté de gauche de la sous-matrice Ma, les groupes GR'a1, GR'a2, GR'a3 et GR'a4 du côté droit ; et les groupes correspondants GRb1 à GRb4, et GR'b1, à GR'b4 pour la sous-matrice Mb.

A l'intérieur d'un groupe, les colonnes sont disposées au même pas de colonne Pc que les colonnes des sous-matrices Ma et Mb.

Deux groupes de même rang numérique et situés d'un même côté des sous-matrices sont considérés comme formant un couple de "groupes correspondants", par exemple le groupe GRa2 et le groupe GRb2 sont deux "groupes correspondants", et forment le couple de rang 2. Deux groupes de colonnes correspondants faisant partie d'un même couple sont identiques. En pratique, le plus simple est que tous les groupes de colonnes soient identiques : ils ont tous le même nombre de colonnes et le même nombre de lignes ; le nombre de lignes est de préférence égal à celui de la sous-matrice correspondante (N1). Les groupes de colonnes observent une image sur les bords de l'image vue par la sous-matrice. Pour chaque colonne des groupes de colonnes latéraux, les signaux sont accumulés exactement comme ceux des sous-matrices principales Ma et Mb.

Les positions latérales des groupes de colonnes sont définies par rapport à la position de la sous-matrice, par exemple par rapport au bord gauche de la sous-matrice Ma pour les groupes de colonnes GRa1 à GRa4 et par rapport au bord droit pour les groupes GR'a1 à GR'a4.

Si on considère les positions par rapport à un axe d'abscisse X dans le sens des lignes (axe horizontal) et un axe d'ordonnées Y dans le sens des colonnes (axe vertical), les groupes de colonnes GRa1 à GRa4 sont disposés à des distances horizontales respectives Da1 à Da4 selon l'axe X. L'axe d'ordonnées Y peut être pris sur un bord de la matrice principale de N lignes et P colonnes. Et de même les groupes GRb1 à GRb4 sont à des distances respectives Db1 à Db4. Pour les groupes de droite, on peut prendre pour référence d'abscisse un axe Y' situé sur l'autre bord ; les distances sont Da'1 à Da'4 et Db'1 à Db'4, symétriques des distances Da1 à Da4 et Db1 à Db4.

Dans l'exemple représenté, on considère que les groupes de colonne de rang numérique 1 sont à une distance d nulle (Da1 = Db1 = Da'1 = Db'1 = 0) des axes Y ou Y', ce qui veut dire en pratique que ces groupes peuvent même faire partie de la sous-matrice Ma ou Mb. Les colonnes de ces groupes sont effet dans la continuité du pas de répartition des colonnes de l'ensemble de la matrice.

Mais les autres groupes sont situés à des distances d' non nulles qui représentent la position relative respective du groupe de colonnes par rapport à la sous-matrice. A l'exception du groupe de rang 1 pour lequel d = d' = 0, les distances d ne sont pas les mêmes pour les groupes associés à la sous-matrice Ma que les distances d' pour les groupes associés à la sous-matrice Mb. Plus précisément, pour un couple de groupes de même rang (appelés encore groupes "correspondants"), par exemple le couple GRa3, GRb3, la différence entre la position relative du groupe associé à la sous-matrice Ma et la position relative du groupe correspondant associé à l'autre sous-matrice Mb est égale à une fraction du pas de répartition des colonnes de la sous-matrice, ; de plus, cette différence n'est pas la même pour les différents groupes correspondants : elle varie en fonction du rang du couple de groupes.

Ainsi, les différences Db1-Da1, Db2-Da2, Db3-Da3, Db4-Da4 sont différentes les unes des autres et toutes inférieures à un pas Pc de répartition des colonnes.

La raison de ces valeurs inférieures à un pas est le fait qu'on souhaite détecter des fluctuations de position inférieures à un pas Pc en colonne. On pourrait cependant rajouter également d'autres couples de groupes de colonne dont la différence de position relative serait supérieure à un pas.

A titre d'exemple, si on a 4 groupes de colonnes comme cela est représenté et si on veut détecter des erreurs de position par incréments de un quart du pas Pc, on choisira les positions relatives de sorte que Db1-Da1= 0, Db2-Da2 = Pc/4 ; Db3-Da3 = Pc/2 ; Db4-Da4 = 3Pc/4.

La différence de position relative d'-d, pour les couples de groupes successifs de rang croissant est donc de préférence une succession de multiples entiers d'une fraction de pas Pc des pixels.

Sur la figure 2 on a exagéré les valeurs de ces différences de distances ; ces valeurs sont des fractions du pas Pc des colonnes, mais le pas des colonnes est trop petit pour qu'on puisse en faire une représentation sur la figure ; il y a en effet plusieurs centaines de colonnes dans la matrice.

Sur cette figure 2, on a considéré qu'il y a quatre groupes de colonnes associés à chaque côté de chaque sous-matrice, mais l'invention est applicable dès lors qu'il y en a au moins deux, à savoir au moins un premier groupe de colonnes et un deuxième groupe de colonnes, et au moins le deuxième groupe de colonnes (GRb2) associé à une sous-matrice (Mb) est à une position relative qui n'est pas la même que la position relative du deuxième groupe de colonnes (GRa2) correspondant associé à l'autre sous-matrice (Ma). Le premier groupe de colonnes (GRb1) associé à la deuxième sous-matrice peut avoir la même position relative que le premier groupe de colonnes (GRa1) associé à la première sous-matrice.

La détection d'erreur de défilement est effectuée de la manière suivante : les colonnes de chaque groupe de plusieurs colonnes fournissent, à la fin d'une durée N1xT égale à N1 périodes d'intégration, des signaux accumulés (sur N1 lignes) représentant un point d'image (on suppose que les colonnes des groupes observent une image non uniforme). Le profil de signaux issus d'un groupe de colonnes d'indice "a" est comparé au profil de signaux fourni ultérieurement par le groupe correspondant de même rang et d'indice "b". La comparaison doit porter sur la même ligne d'image observée, et par conséquent elle doit tenir compte du décalage temporel dû au nombre de lignes N1 (décalage de N1xT) et dû à la distance de séparation Ds (décalage supplémentaire égal à TxDs/P_{L}, P_{L} étant le pas des lignes). En d'autres mots, si on observe le profil de signal issu à l'instant t d'un groupe de colonne associé à la sous-matrice Ma, on doit comparer ce profil au profil issu du groupe correspondant associé à la sous-matrice Mb à l'instant t + N1xT + TxDs/P_{L}.

La comparaison est faite deux-à-deux pour tous les couples de groupes correspondants de même rang, et ceci de chaque côté des sous-matrices.

Par profil de signal d'un groupe de colonnes, on entend les différentes valeurs de signal fournies par les différentes colonnes du groupe considéré à un moment donné.

On détermine quelle est la comparaison qui fournit les profils les plus proches.

Si les profils les plus proches sont ceux du couple GRa1, GRb1, on considère qu'il n'y a pas d'écart de défilement.

Si les profils les plus proches sont ceux du couple GRa2, GRb2, on considère qu'il y a eu un écart égal à Db2-Da2 vers la gauche pendant le déplacement d'image de la sous-matrice Ma à la sous-matrice Mb.

Si les profils les plus proches sont ceux d'un couple de rang numérique plus élevé du côté gauche, on considère qu'il y a eu un écart encore plus élevé, Db3-Da3 ou Db4-Da4.

Si les profils les plus proches sont ceux d'un couple situé de l'autre côté de la matrice, on considère que l'écart est dans l'autre sens et, là encore, d'autant plus important que le rang du couple est plus élevé.

Pour que le profil soit significatif, il faut que chaque groupe de colonne comporte un nombre suffisant de colonnes, par exemple au moins 5 colonnes mais de préférence 10 colonnes ou plus.

Une manière d'évaluer la différence de profils de signal de deux groupes de colonnes correspondants est la suivante : on mesure le signal intégré sur N1 lignes pour chaque colonne de chaque groupe ; pour un rang déterminé, on compte le nombre de colonnes pour laquelle la différence des mesures entre une colonne d'un groupe et une colonne correspondante de l'autre groupe est inférieure à un seuil déterminé ; si ce nombre est faible c'est que les deux groupes de colonne de même rang n'ont pas vu la même image ; s'il est élevé, c'est que les deux groupes ont probablement vu la même image ; on compare les résultats pour les rangs différents de 1 à 4, et on sélectionne le rang (donc la paire de groupes correspondants) pour lequel le nombre de colonnes ainsi comptées est le plus élevé ; c'est pour ce rang que les profils de signal coïncident le mieux.

Une autre manière de comparer les résultats des paires de groupes consiste à calculer une somme quadratique des différences de signal entre les colonnes de même rang (rang à l'intérieur du groupe) d'une paire de groupes correspondants, et sélectionner la paire pour laquelle cette somme quadratique est la plus petite.

Ayant identifié le décalage, mesuré de préférence en fractions du pas de colonne Pc, sur la durée N1 x T + T x Ds/P_{L}, on peut s'en servir pour effectuer une correction sur l'image principale de 2 x N1 x P pixels résultant de l'addition des signaux (décalés dans le temps) issus des sous-matrices Ma et Mb. Au lieu d'ajouter purement et simplement les signaux issus de colonnes correspondantes des sous-matrices Ma et Mb, on ajoute à une colonne de la sous-matrice Ma une combinaison de l'information issue de la même colonne dans la sous-matrice Mb et de l'information issue d'une colonne voisine (du côté du décalage observé), avec une pondération dépendant de la valeur du décalage observé.

Ainsi, si le désalignement observé entre les sous-matrices Ma et Mb a une valeur Pc/q, q entier, on ajoute au signal issu d'une colonne de la sous-matrice Ma le signal issu de la même colonne de la sous-matrice Mb, mais pondéré par la valeur (1-1/q) et le signal issu de la colonne voisine (du côté du décalage) de la sous-matrice Mb, pondéré par la valeur 1/q.

L'accumulation de signaux ainsi obtenue sur 2xN1 lignes est ainsi corrigée en partie de l'effet de désalignement détecté.

Si les sous-matrices n'ont pas le même nombre de lignes et fournissent donc des signaux d'amplitude différente pour une même image, on en tient compte pour calculer la correction à appliquer.

Dans ce qui précède on a divisé la matrice en deux parties Ma et Mb. On peut cependant la diviser en un plus grand nombre de sous-matrices de N2 lignes chacune. Dans ce cas on associe des groupes de colonnes latérales à chaque sous-matrice, avec des positions relatives latérales différentes entre une sous-matrice et la sous-matrice suivante.

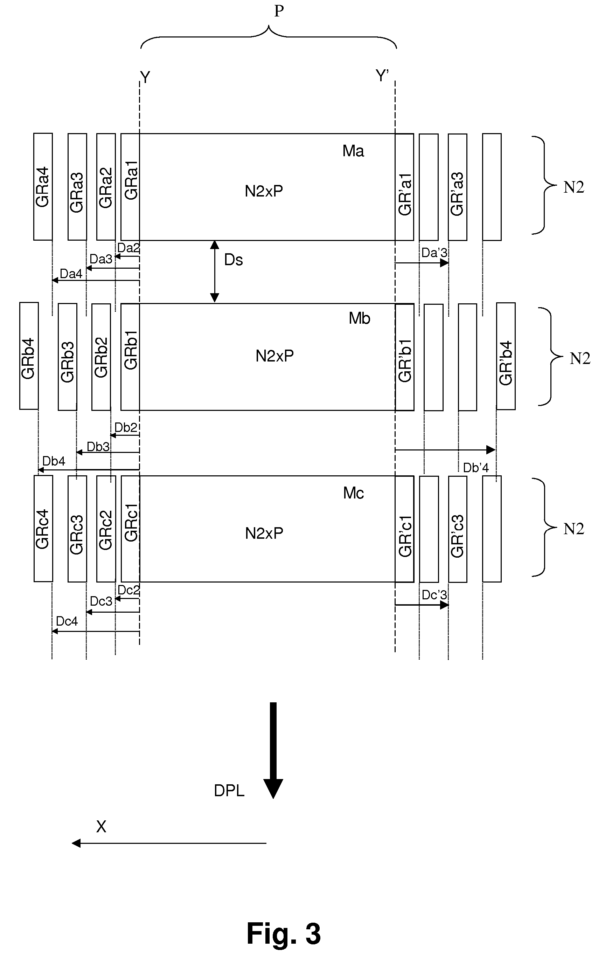

Par exemple, dans la configuration de la figure 3, on a prévu une troisième sous-matrice Me ; les matrices ont N2 lignes chacune avec N = 3 x N2. Pour simplifier, on a choisi comme positions relatives des groupes de colonne associées à la troisième sous-matrice les mêmes positions que celles des groupes associés à la première sous-matrice Ma. Ainsi, ces positions relatives sont différentes de celles des groupes associés à la sous-matrice Mb. Par exemple, les positions Dc2, Dc3, Dc4, sont telles que Dc2-Db2 = -Pc/4, Dc3-Db3 = -Pc/2, et Dc4-Db4 = -3Pc/4 si on considère, comme dans un exemple précédent, des décalages avec une résolution d'un quart de pas de pixel. Il faut bien entendu prendre en compte le fait que le décalage éventuel déterminé entre les sous-matrices Mb et Mc s'apprécie avec un signe opposé au décalage déterminé entre les sous-matrices Ma et Mb.

Pour la comparaison des signaux issus des groupes associés aux deux sous-matrices Mb et Mc, on prend en compte le décalage temporel résultant de la position de la sous-matrice Mc par rapport à la sous-matrice Mb, de même qu'on prenait en compte le décalage Ds entre les sous-matrices Ma et Mb.

Le décalage de la sous-matrice Mc sera donc déterminé par rapport à la sous-matrice Mb, mais pour la correction d'erreur, c'est le décalage global de la matrice Mc par rapport à la sous-matrice Ma qui devra être déterminé, par addition algébrique des décalages de la sous-matrice Mb par rapport à Ma et de la sous-matrice Mc par rapport à la sous-matrice Mb.

S'il y a une quatrième sous-matrice, le plus simple est de disposer les groupes de colonnes aux mêmes positions que ceux qui sont associés à la deuxième sous-matrice. Et ainsi de suite.

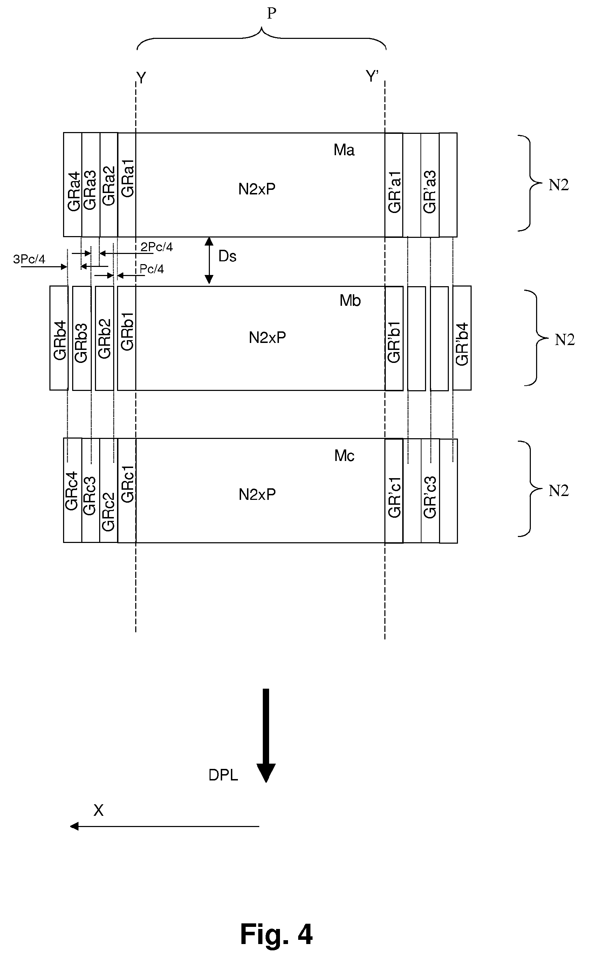

La figure 4 montre une disposition simple dans laquelle les positions relatives des groupes associés à la première sous-matrice Ma sont des multiples du pas des colonnes, c'est-à-dire que toutes les colonnes de tous les groupes sont dans la continuité du pas des colonnes de la sous-matrice Ma. Dans ce cas, il suffit que les différents groupes de colonne de la sous-matrice Mb soient écartées du groupe de rang précédent d'une même fraction du pas de colonne. Par exemple, le groupe Grb2 est séparé du groupe GRb1 d'un quart de pas Pc/4 ; le groupe GRb3 est séparé du groupe GRb2 de la même distance Pc/4 et le groupe GRb4 est séparé du groupe GRb3 de la même distance Pc/4. Il en résulte que les groupes de rang 1 sont alignés, les groupes de rang 2 sont décalés de Pc/4, les groupes de rang 3 sont décalés de Pc/2, et les groupes de rang 4 sont décalés de 3Pc/4. S'il y a une troisième matrice, comme c'est le cas sur la figure 4, le plus simple est de disposer les groupes associés à la troisième matrice de la même manière que ceux de la première matrice, comme c'était le cas sur la figure 3.

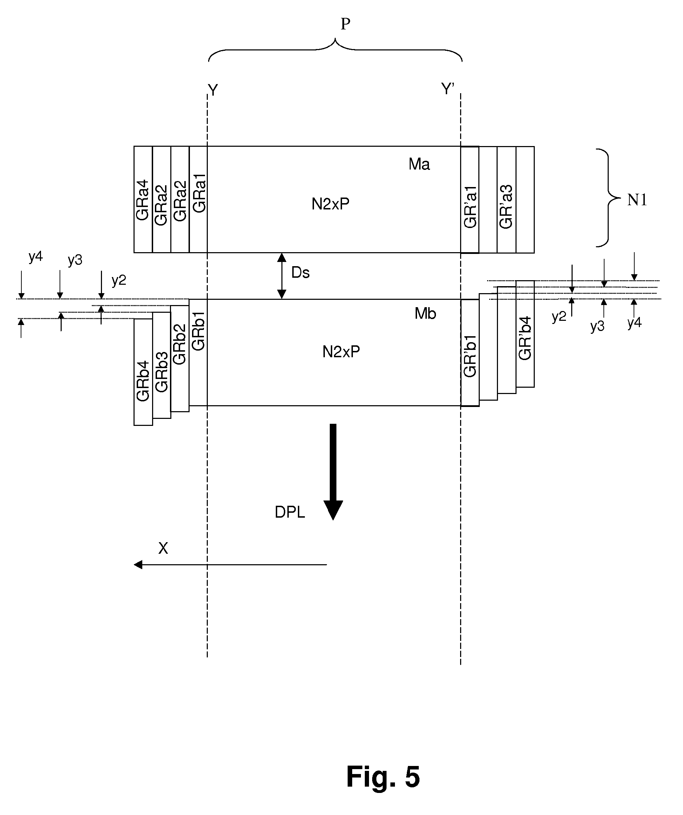

La figure 5 représente une organisation du capteur matriciel pour la détection et éventuellement la correction d'une erreur de vitesse de défilement ente le capteur et l'image.

Le capteur comporte à nouveau une matrice subdivisée en plusieurs sous-matrices, ici deux sous-matrices Ma et Mb de N1xP pixels chacune. Il comporte également plusieurs groupes de colonnes associés à chacun des côtés de chacune des sous-matrices. A la différence des figures 2 à 4, les colonnes de groupes de même rang associés aux deux sous-matrices Ma et Mb sont alignées dans le sens du défilement : il n'y a pas de décalage latéral entre les groupes de même rang. Ceci est vrai pour tous les groupes de colonnes.

Mais les groupes de colonne de rangs croissants sont décalés longitudinalement l'un par rapport à l'autre. Ce décalage est là encore compté par rapport à la sous-matrice respective. Ainsi, le groupe Grb1 a un décalage longitudinal nul par rapport au groupe Gra1. Le groupe Grb2 a un décalage y2 d'une fraction de pas (par exemple un quart de pas) en ligne par rapport au groupe Gra2. Le groupe Grb3 a un décalage y3 deux fois plus grand que y2, et le groupe GRb4 a un décalage y4 trois fois plus grand que y1. Les pixels des groupes de colonnes associés à la matrice Mb sont donc décalés longitudinalement d'une fraction de pixel par rapport aux pixels correspondants des groupes associés à la matrice Ma.

Sur le côté droit de la matrice, les décalages sont dans le sens contraire de ceux du côté gauche pour permettre la détection d'une variation de synchronisation en sens inverse.

La détection d'un décalage s'effectue encore par comparaison des profils de signaux issus des différents groupes de même rang. Si la meilleure correspondance de profils est celle des groupes de rang 2 par exemple (GRa2 et GRb2), il est probable qu'il y a eu un défaut de synchronisation correspondant à un décalage longitudinal y2. On peut tenir compte de ce décalage dans l'addition des signaux issus des deux sous-matrices. Au lieu d'additionner les signaux bruts de pixels ayant théoriquement vu le même point d'image, on additionnera aux signaux d'un pixel de la matrice Ma une combinaison linéaire de deux pixels de la matrice Mb avec des coefficients de pondération (m-1)/m et 1/m, m entier, où 1/m désigne ici la fraction de pas de ligne pour laquelle la meilleure correspondance à été trouvée. Ainsi on compense au moins en partie le décalage détecté.

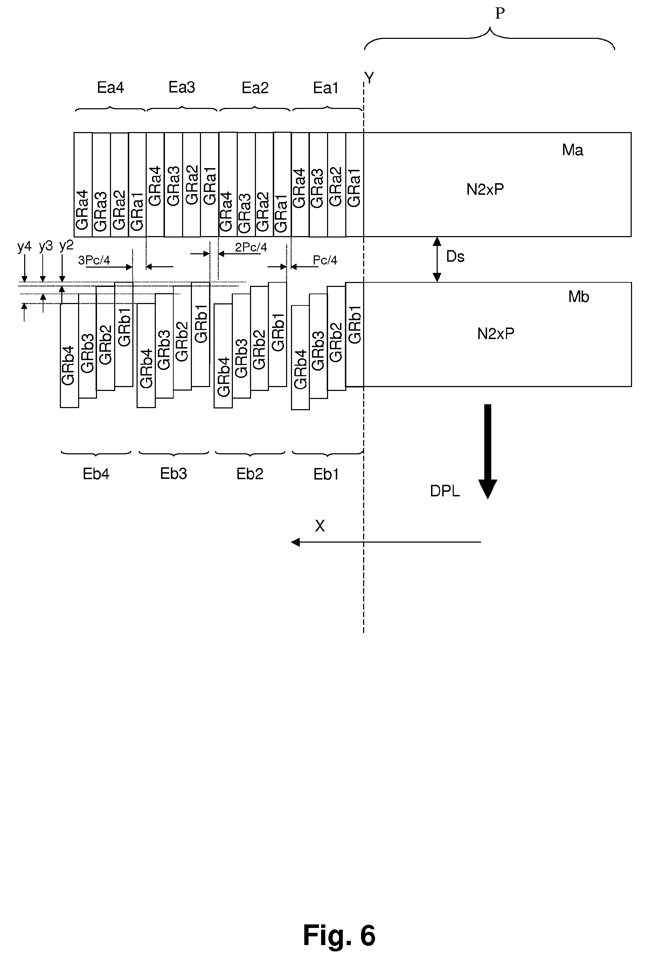

Enfin, sur la figure 6, on a représenté une manière de combiner la détection de décalages latéraux et de décalages longitudinaux. On considère pour simplifier qu'il n'y a que deux sous-matrices mais le principe peut être étendu à un plus grand nombre de sous-matrices. Les groupes de colonnes associés à la sous-matrice Ma sont organisés en plusieurs ensembles Ea1, Ea2, Ea3, Ea4 de rang croissant au fur et à mesure de leur écartement par rapport à la sous-matrice ; dans chaque ensemble il y a quatre groupes de colonnes GRa1, GRa2, GRa3, GRa4. De même, les groupes de colonnes associés à la sous-matrice Mb sont organisés en ensembles Eb1, Eb2, Eb3, Eb4 correspondant respectivement chacun à l'ensemble de même rang associé à la sous-matrice Ma ; et dans chaque ensemble il y a quatre groupes de colonnes GRb1, GRb2, GRb3, GRb4 correspondant chacun à un groupe respectif de même rang de l'ensemble correspondant associé à la sous-matrice Ma. Il y a des ensembles de groupes des deux côtés de la sous-matrice mais seuls les ensembles situés sur la gauche de la sous-matrice sont représentés.

Les décalages latéraux sont pris égaux à des multiples de 0 à 3 du quart du pas en colonne. Ce sont les décalages entre deux groupes de même rang appartenant à deux ensembles de même rang. Ils dépendent uniquement du rang de l'ensemble ; ils ne dépendent pas du rang à l'intérieur de l'ensemble car le décalage latéral est le même pour tous les couples de groupes ayant le même rang dans l'ensemble et appartenant à deux ensembles de même rang.

Les décalages longitudinaux sont indiqués comme ayant des valeurs 0, y2, y3, y4 pour les rangs croissants ; ces valeurs peuvent également être des fractions d'un pas en ligne des pixels. De même que pour les décalages latéraux, ce sont les décalages entre deux groupes de même rang appartenant à des ensembles de même rang. Le décalage longitudinal dépend du rang du couple dans un ensemble mais il ne dépend pas du rang de l'ensemble car les décalages sont distribués de la même manière pour tous les ensembles quel que soit leur rang.

On effectue des comparaisons des signaux résultant de groupes de colonnes appartenant à deux ensembles de même rang et ayant le même rang à l'intérieur de l'ensemble, et ceci à gauche et à droite des matrices. Ainsi, par exemple, on compare les signaux du groupe GRa3 de l'ensemble Ea2 avec les signaux du groupe GRb3 de l'ensemble Eb2 à gauche de la matrice. La comparaison qui donne le meilleur résultat parmi toutes les comparaisons détermine un rang de couple de groupes de colonnes et un rang d'ensembles auxquels ils appartiennent. Le décalage latéral est le décalage latéral entre les deux ensembles de ce rang. Le décalage longitudinal est le décalage longitudinal entre les groupes du couple.

La disposition de la figure 6 permet donc une détermination simultanée du décalage latéral et du décalage longitudinal pendant le défilement d'une sous-matrice à la suivante.

La correction du décalage se fait en combinant linéairement à la fois des pixels de lignes voisines pour tenir compte du décalage longitudinal et des colonnes voisines pour tenir compte du décalage latéral.

## Revendications

1. Capteur d'image matriciel à défilement et sommation de signaux, comprenant une matrice de N lignes de P colonnes de pixels organisés avec un pas constant en ligne et en colonne, avec des moyens pour sommer les signaux issus de N pixels ayant vu un même point d'une image observée au cours de N étapes d'intégration de charges, **caractérisé en ce que** :
- la matrice est divisée en au moins une première et une deuxième sous-matrices (Ma, Mb) se succédant dans le sens des colonnes, les signaux intégrés par les colonnes d'une sous-matrice pouvant être lus indépendamment des signaux intégrés par les colonnes des autres sous-matrices,
- de chaque côté de chaque sous-matrice sont disposés au moins un premier (GRa1, GRb1) et un deuxième (GRa2, GRb2) groupes de colonnes supplémentaires associés à ce côté de la sous-matrice (Ma, Mb),
- les groupes de colonnes associés à un côté de la deuxième sous-matrice sont identiques aux groupes de colonnes associés au même côté de la première sous-matrice et à chaque groupe associé à la première sous-matrice on fait correspondre un groupe respectif de la deuxième sous-matrice, la position relative (Da2) du deuxième groupe associé à la première sous-matrice, étant différente de la position relative (Db2) du deuxième groupe correspondant de la deuxième sous-matrice, la position relative d'un groupe étant définie par rapport à la position de la sous-matrice correspondant à ce groupe, et la différence (Db2-Da2) des dites positions relatives des deux deuxièmes groupes correspondants étant inférieure au pas des pixels de la matrice,
- le capteur comprend en outre des moyens pour comparer entre eux les signaux intégrés issus des groupes de colonnes correspondants des deux sous-matrices et des moyens pour sélectionner, parmi les couples de groupes correspondants, le couple qui fournit les signaux les plus proches l'un de l'autre, la différence de position relative des groupes du couple sélectionné représentant une information de décalage relatif entre le capteur et l'image observée.

2. Capteur d'image selon la revendication 1, **caractérisé en ce qu'**il comporte de chaque côté de chaque sous-matrice au moins un troisième groupe de colonnes (GRa3, GRb3), le troisième groupe de colonnes associé à un côté de la deuxième sous-matrice étant identique au troisième groupe de colonnes associés au même côté de la première sous-matrice, la différence de position relative (Db3-Db2) entre les troisièmes groupes associés aux deux sous-matrices étant inférieure à un pas de pixel et étant différente de la différence (Db2-Da2) entre les positions relatives des deuxièmes groupes.

3. Capteur d'image selon l'une des revendications 1 et 2, **caractérisé en ce que** la matrice est divisée dans le sens des colonnes en au moins trois sous-matrices (Ma, Mb, Mc), avec plusieurs groupes de colonnes associées à chaque sous-matrice et ayant chacun un groupe correspondant associé à chacune des autres sous-matrices, les différences de position relative entre groupes de colonnes correspondants de deux sous-matrices successives étant variables selon le rang du groupe.

4. Capteur d'image selon l'une des revendications 1 à 3, **caractérisé en ce que** la différence de position relative est une différence de position dans le sens des lignes en vue de la recherche d'un décalage latéral du capteur par rapport à l'image (figure 4).

5. Capteur d'image selon l'une des revendications 1 à 3, **caractérisé en ce que** la différence de position relative est une différence de position dans le sens des colonnes en vue de la recherche d'un écart de synchronisation entre la vitesse de défilement de l'image par rapport au capteur et la cadence d'intégration et de lecture des charges photo-générées dans les pixels (figure 5).

6. Capteur d'image selon l'une des revendications 4 et 5, **caractérisé en ce que** la différence de position relative inclut à la fois une différence dans le sens des lignes et une différence dans le sens des colonnes (figure 6).

7. Capteur d'image selon l'une des revendications précédentes, **caractérisé en ce que** les colonnes des différents groupes sont disposées, à l'intérieur de chaque groupe, au même pas (Pc) que les colonnes des sous-matrices, le premier groupe de colonnes (GRa1, GRb1) des première (Ma) et deuxième sous-matrices étant disposé dans la continuité du pas (Pc) des colonnes de la sous-matrice correspondante, le deuxième groupe (GRa2) de la première sous-matrice étant espacé latéralement par rapport au premier groupe d'une distance donnée d nulle ou non nulle et le deuxième groupe (GRb2) de la deuxième sous-matrice étant décalé latéralement d'une distance différente d', la valeur absolue de la différence d'-d étant inférieure au pas des colonnes.

8. Capteur d'image selon la revendication 7, comportant au moins un troisième groupe de colonnes de chaque côté de chaque sous-matrice, le troisième groupe de colonnes associé à un côté de la deuxième sous-matrice étant identique au troisième groupe de colonnes associés au même côté de la première sous-matrice, la différence de position relative entre les troisièmes groupes associés aux deux sous-matrices étant un multiple entier d'une fraction de pas des colonnes.

9. Capteur d'image selon l'une des revendications précédentes, **caractérisé en ce que** les colonnes des différents groupes sont disposées, à l'intérieur de chaque groupe, au même pas Pc que les colonnes des sous-matrices, le premier groupe de colonnes des première et deuxième sous-matrices étant disposé dans la continuité du pas Pc des colonnes de la sous-matrice correspondante, le deuxième groupe de la première sous-matrice étant situé également dans la continuité du pas des colonnes, et le deuxième groupe de la deuxième sous-matrice étant décalé latéralement du premier groupe de la deuxième sous-matrice d'une fraction Pc/q du pas des colonnes, q entier.

10. Capteur d'image selon la revendication 1, **caractérisé en ce qu'**il comporte plusieurs ensembles de plusieurs groupes de colonnes associés à chaque sous-matrice, les groupes d'un même ensemble étant espacés latéralement d'une même valeur, nulle ou non nulle, et, pour la deuxième sous-matrice, décalés longitudinalement les uns par rapport aux autres d'une distance différente (y2, y3, y4) selon le rang du groupe dans l'ensemble mais identique pour les groupes de même rang des différents ensembles de la deuxième sous-matrice, les ensembles de même rang dans la série d'ensembles étant décalés latéralement l'un par rapport à l'autre d'une distance qui varie selon le rang de ces ensembles.

## Patentansprüche

1. Matrixbildsensor mit Bewegung und Signalsummierung, der eine Matrix von N Reihen und P Spalten von Pixeln umfasst, die mit konstanter Reihen- und Spaltenteilung organisiert sind, mit Mitteln zum Summieren der von N Pixeln kommenden Signale mit Blick auf einen selben Punkt eines im Laufe von N Ladungsintegrationsschritten beobachteten Bildes, **dadurch gekennzeichnet, dass**:
- die Matrix in wenigstens eine erste und eine zweite Submatrix (Ma, Mb) unterteilt ist, die in Spaltenrichtung aufeinander folgen, wobei die durch die Spalten einer Submatrix integrierten Signale unabhängig von den durch die Spalten der anderen Submatrizen integrierten Signalen gelesen werden können,
- von jeder Seite jeder Submatrix wenigstens eine erste (GRa1, GRb1) und eine zweite (GRa2, GRb2) Gruppe von zusätzlichen Spalten angeordnet sind, die mit dieser Seite der Submatrix (Ma, Mb) assoziiert sind,
- die mit einer Seite der zweiten Submatrix assoziierten Spaltengruppen mit den mit derselben Seite der ersten Submatrix assoziierten Spaltengruppen identisch sind, und mit jeder mit der ersten Submatrix assoziierten Gruppe eine jeweilige Gruppe der zweiten Submatrix in Übereinstimmung gebracht wird, wobei sich die relative Position (Da2) der mit der ersten Submatrix assoziierten zweiten Gruppe von der relativen Position (Db2) der mit der zweiten Submatrix übereinstimmenden zweiten Gruppe unterscheidet, wobei die relative Position einer Gruppe in Bezug auf die Position der dieser Gruppe entsprechenden Submatrix definiert wird und die Differenz (Db2-Da2) der relativen Positionen der entsprechenden zwei zweiten Gruppen kleiner ist als die Teilung der Pixel der Matrix,
- der Sensor ferner Mittel zum Vergleichen der von den entsprechenden Spaltengruppen der zwei Submatrizen kommenden integrierten Signale miteinander und Mittel zum Auswählen des Paares aus den Paaren von entsprechenden Gruppen umfasst, das die einander am nächsten liegenden Signale liefert, wobei die Differenz der relativen Positionen der Gruppen des gewählten Paares eine Information des relativen Versatzes zwischen dem Sensor und dem beobachteten Bild repräsentiert.

2. Bildsensor nach Anspruch 1, **dadurch gekennzeichnet, dass** er auf jeder Seite von jeder Submatrix wenigstens eine dritte Spaltengruppe (GRa3, GRb3) umfasst, wobei die mit einer Seite der zweiten Submatrix assoziierte dritte Spaltengruppe mit der mit derselben Seite der ersten Submatrix assoziierten dritten Spaltengruppe identisch ist, wobei die Differenz der relativen Positionen (Db3-Db2) zwischen den mit den zwei Submatrizen assoziierten dritten Gruppen kleiner ist als eine Pixelteilung und sich von der Differenz (Db2-Da2) zwischen den relativen Positionen der zweiten Gruppen unterscheidet.

3. Bildsensor nach einem der Ansprüche 1 und 2, **dadurch gekennzeichnet, dass** die Matrix in Spaltenrichtung in wenigstens drei Submatrizen (Ma, Mb, Mc) unterteilt ist, wobei mehrere Spaltengruppen mit jeder Submatrix assoziiert sind und jeweils eine entsprechende mit jeder der anderen Submatrizen assoziierte Gruppe haben, wobei die Differenzen der relativen Positionen zwischen entsprechenden Spaltengruppen von zwei aufeinander folgenden Submatrizen gemäß dem Rang der Gruppe variabel sind.

4. Bildsensor nach einem der Ansprüche 1 bis 3, **dadurch gekennzeichnet, dass** die Differenz der relativen Positionen eine Positionsdifferenz in Richtung der Reihen im Hinblick auf die Suche eines lateralen Versatzes des Sensors in Bezug auf das Bild ist (Fig. 4).

5. Bildsensor nach einem der Ansprüche 1 bis 3, **dadurch gekennzeichnet, dass** die Differenz der relativen Positionen eine Positionsdifferenz in Richtung der Spalten im Hinblick auf die Suche einer Synchronisationsabweichung zwischen der Laufgeschwindigkeit des Bildes in Bezug auf den Sensor und dem Integrations- und Lesetakt von in den Pixeln fotogenerierten Ladungen ist (Fig. 5).

6. Bildsensor nach einem der Ansprüche 4 und 5, **dadurch gekennzeichnet, dass** die Differenz der relativen Positionen gleichzeitig eine Differenz in Reihenrichtung und eine Differenz in Spaltenrichtung (Fig. 6) beinhaltet.

7. Bildsensor nach einem der vorherigen Ansprüche, **dadurch gekennzeichnet, dass** die Spalten von unterschiedlichen Gruppen im Innern jeder Gruppe mit derselben Teilung (Pc) angeordnet sind wie die Spalten der Submatrizen, wobei die erste Spaltengruppe (GRa1, GRb1) der ersten (Ma) und zweiten Submatrix in der Kontinuität der Teilung (Pc) der Spalten der entsprechenden Submatrix angeordnet ist, wobei die zweite Gruppe (GRa2) der ersten Submatrix lateral in Bezug auf die erste Gruppe um eine gegebene Distanz d von null oder ungleich null beabstandet ist und die zweite Gruppe (GRb2) der zweiten Submatrix lateral in einem anderen Abstand d' versetzt ist, wobei der absolute Wert der Differenz d'-d kleiner als die Teilung der Spalten ist.

8. Bildsensor nach Anspruch 7, der wenigstens eine dritte Spaltengruppe auf jeder Seite jeder Submatrix umfasst, wobei die mit einer Seite der zweiten Submatrix assoziierte dritte Spaltengruppe mit der mit derselben Seite der ersten Submatrix assoziierten dritten Spaltengruppe identisch ist, wobei die Differenz der relativen Positionen zwischen den mit den zwei Submatrizen assoziierten dritten Gruppen ein ganzzahliges Vielfaches eines Bruchteils der Teilung der Spalten ist.

9. Bildsensor nach einem der vorherigen Ansprüche, **dadurch gekennzeichnet, dass** die Spalten von unterschiedlichen Gruppen im Innern jeder Gruppe mit derselben Teilung Pc angeordnet sind wie die Spalten der Submatrizen, wobei die erste Spaltengruppe der ersten und zweiten Submatrix in der Kontinuität der Teilung Pc der Spalten der entsprechenden Submatrix angeordnet sind, wobei sich die zweite Gruppe der ersten Submatrix ebenfalls in der Kontinuität der Teilung der Spalten befindet und die zweite Gruppe der zweiten Submatrix lateral von der ersten Gruppe der zweiten Submatrix um einen Bruchteil Pc/q der Teilung der Spalten versetzt ist, wobei q eine ganze Zahl ist.

10. Bildsensor nach Anspruch 1, **dadurch gekennzeichnet, dass** er mehrere Sätze von mehreren mit jeder Submatrix assoziierten Spaltengruppen umfasst, wobei die Gruppen von einem Satz lateral um einen selben Wert von null oder ungleich null beabstandet und für die zweite Submatrix longitudinal relativ zueinander um eine andere Distanz (y2, y3, y4) gemäß dem Rang der Gruppe in dem Satz versetzt, aber für die Gruppen desselben Rangs von unterschiedlichen Sätzen der zweiten Submatrix identisch sind, wobei die Sätze desselben Rangs in der Serie von Sätzen lateral relativ zueinander um eine Distanz versetzt sind, die gemäß dem Rang dieser Sätze variiert.

## Claims

1. Time delay integration matrix image sensor, comprising a matrix of N rows and P columns of pixels organized with a constant row and column pitch, with means for summing the signals issued from N pixels having seen one and the same point of an image observed over N steps of charge integration, **characterized in that**:
- the matrix is divided into at least a first and a second sub-matrix (Ma, Mb) succeeding each other in the column direction, the signals integrated by the columns of a sub-matrix being readable independently of the signals integrated by the columns of the other sub-matrices;
- on each side of each sub-matrix are arranged at least a first (GRa1, GRb1) and a second (GRa2, GRb2) group of additional columns associated with this side of the sub-matrix (Ma, Mb);
- the groups of columns associated with one side of the second sub-matrix are identical to the groups of columns associated with the same side of the first sub-matrix and to each group associated with the first sub-matrix is made to correspond a respective group of the second sub-matrix, the relative position (Da2) of the second group associated with the first sub-matrix being different from the relative position (Db2) of the second corresponding group of the second sub-matrix, the relative position of a group being defined with respect to the position of the sub-matrix corresponding to this group, and the difference (Db2-Da2) between said relative positions of the two second corresponding groups being less than the pitch of the pixels of the matrix; and
- the sensor furthermore comprises means for mutually comparing the integrated signals originating from the corresponding groups of columns of the two sub-matrices and means for selecting, among the pairs of corresponding groups, the pair that provides the signals that are closest to each other, the relative position difference of the groups of the selected pair representing an item of information about the relative shift between the sensor and the observed image.

2. Image sensor according to Claim 1, **characterized in that** it includes, on each side of each sub-matrix, at least a third group of columns (GRa3, GRb3), the third group of columns associated with one side of the second sub-matrix being identical to the third group of columns associated with the same side of the first sub-matrix, the relative position difference (Db3-Db2) between the third groups associated with the two sub-matrices being less than a pixel pitch and being different from the difference (Db2-Da2) between the relative positions of the second groups.

3. Image sensor according to one of Claims 1 and 2, **characterized in that** the matrix is divided in the column direction into at least three sub-matrices (Ma, Mb, Mc), with several groups of columns associated with each sub-matrix and each having a corresponding group associated with each of the other sub-matrices, the relative position differences between corresponding groups of columns of two successive sub-matrices being variable according to the rank of the group.

4. Image sensor according to one of Claims 1 to 3, **characterized in that** the relative position difference is a position difference in the row direction, with a view to seeking a lateral shift of the sensor with respect to the image (Figure 4).

5. Image sensor according to one of Claims 1 to 3, **characterized in that** the relative position difference is a position difference in the column direction, with a view to seeking a deviation in the synchronization between the travel speed of the image with respect to the sensor and the rate at which the charges photogenerated in the pixels are integrated and read (Figure 5).

6. Image sensor according to one of Claims 4 and 5, **characterized in that** the relative position difference includes both a difference in the row direction and a difference in the column direction (Figure 6).

7. Image sensor according to one of the preceding claims, **characterized in that** the columns of the various groups are arranged, inside each group, at the same pitch (Pc) as the columns of the sub-matrices, the first group of columns (GRa1, GRb1) of the first (Ma) and second sub-matrices being arranged in the continuity of the pitch (Pc) of the columns of the corresponding sub-matrix, the second group (GRa2) of the first sub-matrix being laterally spaced with respect to the first group by a given nil or non-nil distance d and the second group (GRb2) of the second sub-matrix being laterally shifted by a different distance d', the absolute value of the difference d'-d being less than the column pitch.

8. Image sensor according to Claim 7, including at least a third group of columns on each side of each sub-matrix, the third group of columns associated with one side of the second sub-matrix being identical to the third group of columns associated with the same side of the first sub-matrix, the relative position difference between the third groups associated with the two sub-matrices being an integer multiple of a fraction of the column pitch.

9. Image sensor according to one of the preceding claims, **characterized in that** the columns of the various groups are arranged, inside each group, at the same pitch (Pc) as the columns of the sub-matrices, the first group of columns of the first and second sub-matrices being arranged in the continuity of the column pitch Pc of the corresponding sub-matrix, the second group of the first sub-matrix being also situated in the continuity of the column pitch, and the second group of the second sub-matrix being laterally shifted from the first group of the second sub-matrix by a fraction Pc/q of the column pitch, q being an integer.

10. Image sensor according to Claim 1, **characterized in that** it includes several sets of several groups of columns associated with each sub-matrix, the groups of one and the same set being laterally spaced by one and the same nil or non-nil value, and, for the second sub-matrix, longitudinally shifted with respect to each other by a different distance (y2, y3, y4) according to the rank of the group in the set but identical for the groups of same rank of the various sets of the second sub-matrix, the sets of same rank in the series of sets being laterally shifted with respect to each other by a distance that varies according to the rank of these sets.
